# EUROPÄISCHE PATENTANMELDUNG

(11) **EP 0 845 753 A2**
(43) Veröffentlichungstag der Anmeldung: **03.06.1998**
(21) Anmeldenummer: 97120785.7
(22) Anmeldetag: 27.11.1997
(51) Int. Cl.: G06K 19/06

(54) **Plastikkarten mit Speichereinheiten**

(30) Priorität: 28.11.1996 DE 19649370
(71) Anmelder: Schuler, Michael, 01129 Dresden (DE)
(72) Erfinder: Schuler, Michael, 01129 Dresden (DE); Lorenz, Uwe, 01169 Dresden (DE)
(74) Vertreter: Kaufmann, Sigfrid, Doz. Dr.-Ing. habil.

(57) **Zusammenfassung**

Die Erfindung betrifft eine Plastikkarte mit elektronischem Chip oder Magnetstreifen. Bisherige Karten können aufgrund ihrer glatten, planaren Oberfläche schlecht aus ihrem Aufbewahrungsbehältnis herausgenommen werden.

Dieses Problem wird erfindungsgemäß durch das Aufbringen punktueller oder anderer geeigneter Erhebungen auf wenigstens einem Rand der Ober- oder Unterfläche der Plastikkarte gelöst, ohne daß der Gebrauch der Karten in entsprechenden Lesegeräten behindert wird.

## Beschreibung

Die Erfindung betrifft eine Plastikkarte mit Magnetstreifen - oder wie bereits in vielen Anwendungsfällen bevorzugt - mit mikroelektronischen Chips.

Der Einsatz von Plastikkarten ist weit verbreitet. Häufigste Anwendung finden Chipkarten als Telefonkarten für Kartentelefone und Magnetstreifenkarten zur Benutzung von Geldautomaten. Chipkarten werden als elektronischer Ausweis, bisher insbesondere im medizinischen und privatwirtschaftlichen Bereich, und als elektronische Geldbörse oder Kreditkarte benutzt. Der Nutzung von Plastikkarten eröffnen sich ständig weitere Einsatzgebiete. Die Verwendung von Chipkarten zur Identifizierung des Benutzers in Onlinediensten und beim Telephonbanking wird bereits erprobt. Auch die Verwendung als Fahrkarte im öffentlichen Nahverkehr wird getestet.

Chip und Magnetstreifen dienen zur Speicherung und Verarbeitung von Daten, die bei Einführung der Karte in ein geeignetes Lesegerät dem Nutzer zur Verfügung stehen (Lemme, H.: Elektronik 1996, H. 13, S. 42-47).

Die Oberfläche aller Karten ist planar, um die Karten in die notwendigen Datenverarbeitungsgeräte einführen zu können. Dazu wird der mikroelektronische Chip oder Magnetstreifen in die Plastikkarte integriert.

Aufbewahrt werden die beschriebenen Plastikkarten zumeist in Geldbörsen, insbesondere in geeigneten Plastikhüllen. Der Nutzer verfügt zumeist über eine größere Zahl verschiedener Karten, die im selben, engen Behältnis gelagert werden.

Nachteil aller bisher geläufigen Karten ist, daß sie bei der üblichen Aufbewahrung in Behältnissen aufgrund ihrer glatten Oberfläche schlecht herausnehmbar sind.

Es ist daher Ziel der Erfindung, diesen Nachteil zu beseitigen.

Dabei steht die Aufgabe, eine einfache Lösung zu erarbeiten, die es erlaubt, die Plastikkarten wie bisher in den üblichen Kartenlesegeräten insbesondere Geldautomaten weiterzuverwenden.

Diese Ziel- und Aufgabenstellung wird dadurch gelöst, daß an wenigstens einem Rand der Ober- oder Unterseite der Karte griffige Strukturen aufgebracht sind. Die griffigen Strukturen werden durch geeignete kleinflächige, beispielsweise punktuelle, Erhebungen ausgeführt. Die Breite des strukturierten Randes ist variabel.

Vorteil dieser Strukturierung ist, daß man unabhängig von der konkreten Ausgestaltung der griffigen Strukturen auf der Plastikkarte diese leicht aus dem Aufbewahrungsbehälter herausnehmen kann. Die Höhe der Erhebungen ist so gewählt, daß sie die Einführung der Plastikkarten in Kartenlesegeräte nicht behindert.

Für den Benutzer einer derartig modifizierten Karte bedeutet dies einen nicht unerheblichen Zeitgewinn. Der Gebrauch der Plastikkarten wird deutlich erleichtert.

Im folgenden wird die Erfindung anhand eines Ausführungsbeispieles mit Bezug auf die beiliegende Zeichnung näher erläutert.

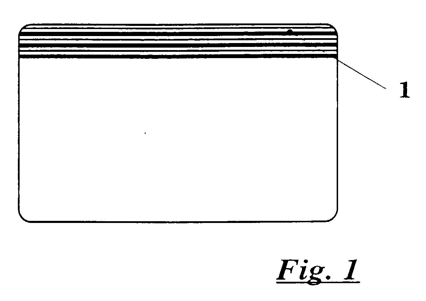

Fig. 1 zeigt die Oberseite der erfindungsgemäßen Plastikkarte. Die griffige Struktur 1 ist in Form von streifenförmigen Erhebungen unterschiedlicher Breite am Rand der Karte ausgeführt.

## Patentansprüche

1. Plastikkarten mit Speichereinheiten, insbesondere Chip- und Magnetstreifenkarten, **dadurch gekennzeichnet**, daß an mindestens einem Rand der oberen und/oder unteren Fläche der Karte griffige Strukturen (1) in Form von punktuellen oder anderen geeigneten kleinflächigen Erhebungen aufgebracht sind.

2. Plastikkarten mit Speichereinheiten nach Anspruch 1., **dadurch gekennzeichnet**, daß die griffige Struktur streifenförmig ausgeführt ist.

3. Plastikkarten mit Speichereinheiten nach Anspruch 1. und 2., **dadurch gekennzeichnet**, daß die beiden Längsseiten strukturiert sind.
